# EUROPÄISCHE PATENTSCHRIFT

(11) **EP 2 807 499 B1**
(45) Veröffentlichungstag und Bekanntmachung des Hinweises auf die Patenterteilung: **20.02.2019**
(21) Anmeldenummer: 12808723.6
(22) Anmeldetag: 07.12.2012
(51) Int. Cl.: G01S 7/524, B06B 1/02, G01S 7/52

(54) **ANSTEUERUNGSSCHALTUNG UND VERFAHREN ZUR AKTIVEN DÄMPFUNG EINES ULTRASCHALLWANDLERS, SOWIE ULTRASCHALL-MESSSYSTEM**
ACTUATING CIRCUIT AND METHOD FOR ACTIVELY DAMPING AN ULTRASONIC CONVERTER, AND ULTRASONIC MEASURING SYSTEM
CIRCUIT DE COMMANDE ET PROCÉDÉ D'AMORTISSEMENT ACTIF D'UN TRANSDUCTEUR ULTRASONORE, ET SYSTÈME DE MESURE PAR ULTRASONS

(30) Priorität: 26.01.2012 DE 102012201100
(43) Veröffentlichungstag der Anmeldung: 03.12.2014
(73) Patentinhaber: Robert Bosch GmbH, 70442 Stuttgart (DE)
(72) Erfinder: KIRCHNER, Tobias, 71636 Ludwigsburg (DE)
(86) Internationale Anmeldenummer: PCT/EP2012/074794
(87) Internationale Veröffentlichungsnummer: WO 2013/110391

(56) Entgegenhaltungen:
- DE-A1- 4 314 247
- DE-C1- 19 548 161
- JP-A- 2006 101 997
- US-A1- 2007 106 159
- US-A1- 2010 113 935

## Beschreibung

### Bereich der Erfindung

Die Erfindung betrifft eine Ansteuerungsschaltung zur Ansteuerung eines Ultraschallwandlers. Insbesondere betrifft die Erfindung eine Ansteuerungsschaltung, die einen Eingang für eine Versorgungsspannung, einen Eingang zum Empfangen eines Ansteuerungspulses, einen Hüllkurvengenerator, und einen Ausgang zur Ausgabe von Spannungsimpulsen an den anzusteuernden Ultraschallwandler aufweist. Außerdem betrifft die Erfindung ein dazugehöriges Verfahren zur Dämpfung eines Wandlerelements eines Ultraschallwandlers durch aktive Gegensteuerung mit elektrischen Ansteuerungsimpulsen, sowie ein Messsystem zum Detektieren von Objekten mittels Ultraschall.

### Stand der Technik

Zur akustischen Umfelderfassung von Fahrzeugen werden derzeit üblicherweise Systeme im Ultraschallbereich verwendet, bevorzugt Pulsweise messende.
Dabei werden typischerweise alle 10 ms bis 300 ms über einen Elektro-Akustik-Wandler akustische Pulse bei ca. 50 kHz ausgesandt. Aus der Pulslaufzeit zu den sendenden und/oder zu den nicht sendenden Wandlern wird auf den Objektabstand im Raum geschlussfolgert.

Typischerweise wird dazu bei einem Ultraschallsensor eine Piezo-Membran mittels elektrischer Impulse in Schwingung versetzt. Diese Schwingung dient der Schall-Abstrahlung. Um den Sender auch gleichzeitig als Empfänger verwenden zu können, muss im Anschluss an die Schall-Abstrahlung die Membran möglichst schnell zum Stillstand gebracht werden. Der an einem Objekt reflektierte Schall trifft dann auf die stehende Membran und versetzt diese erneut in Schwingung.

Jedoch klingt die durch die ursprüngliche Anregung erzeugte Schwingung der Membran typischerweise nur sehr langsam ab, so dass sich diese Schwingung mit dem reflektierten Signal überlagern kann.

Eine Vorgehensweise, um das Abklingen zu beschleunigen, ist die Membran passiv zu dämpfen, indem die Rückseite mit einem speziellen Schaum befüllt wird. In DE 43 14 247 A1 wird dazu eine Schaltungsanordnung zur Dämpfung eines Ultraschallwandlers beschrieben, bei dem die Sendeleistung einer Impulsfolge nach einer vorgegebenen Hüllkurve verringert wird, um die Amplituden von Frequenznebenspektren, die bedingt durch die Rechtecksignalform angeregt werden, beim Abschaltvorgang zu verringern. Dadurch soll die Verwendung von Dämpfungsmaterialien begünstigt werden, die nur für eine vorgegebene Frequenz wirksam sind. Der Ultraschallsensor wird zur Erzeugung des Sendesignals kann dabei beispielsweise mit einer Halbleiterbrückenschaltung angesteuert werden, die wiederum von einem Generator zur Erzeugung der Hüllkurve angesteuert wird.

Alternativ kann die Schwingung auch gezielt durch Gegenansteuerung aktiv gedämpft werden, um die Membran wieder zum Stillstand zu bringen. So wird gemäß dem in DE 10 2009 027 221 A1 gezeigten Verfahren im Anschluss an das Senden zunächst die Ansteuerung des Ultraschallwandlers hochohmig geschaltet, damit die Membran frei schwingen kann. Danach wird der Wandler zur aktiven Dämpfung gegenphasig bzw. phasenverschoben angesteuert. Nach einigen Perioden muss die Ansteuerung erneut mit dem Schwingkreis des Ultraschallwandlers synchronisiert werden, um die Schwingungszustand des Ultraschallsensors bzw. dessen selbständige Schwingung zu messen. Dazu muss die Ansteuerung wieder zeitweise hochohmig geschaltet werden. Nach der Synchronisierung wird erneut gegenphasig angesteuert, wobei dies eventuell mit verminderten Tastgrad oder geringerer Ansteuerspannung durchgeführt wird, um den Schwingkreis nicht zu stark zu bremsen und damit eventuell wieder anzuregen. Auf diese Weise wird ein verbleibendes Sensorsignal erhalten, das klein genug ist, dass der reflektierte Schall detektiert werden kann.

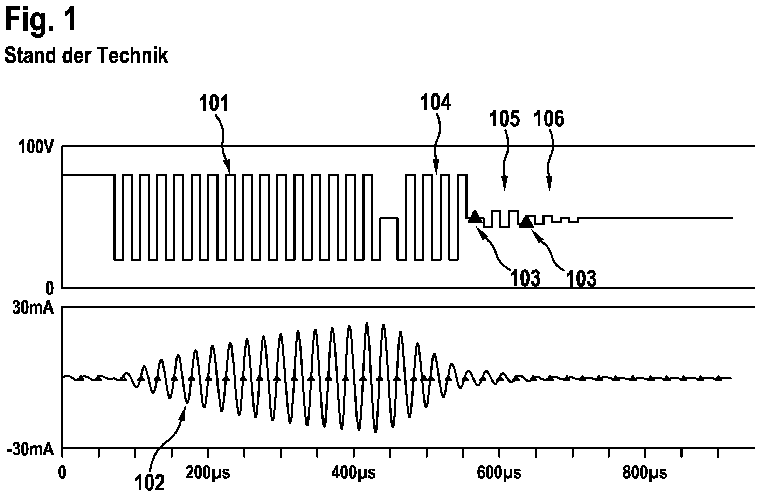

In Figur 1 ist beispielhaft das Prinzip ein solches Verfahren zur aktiven Dämpfung anhand eines Spannung-Zeit- und Strom-Zeit-Diagramms gezeigt. Dabei wird im oberen Teil von Figur 1 der Spannungsverlauf einer Ansteuerungsspannung 101 gezeigt, welche gemäß einem Rechtecksignal mit zeitweilig konstanter Amplitude verläuft. Im Vergleich dazu zeigt der untere Teil von Figur 1 den simulierten Strom 102 in einem gemäß der obigen Ansteuerungsspannung angesteuerten Oszillator, beispielsweise einem Ultraschallsensor. Wie aus der Figur 1 zu erkennen ist, wird bei dem gezeigten Beispiel der Ultraschallsensor zunächst mit einem Rechtecksignal konstanter Amplitude in der Größenordnung von 50 V angeregt und erreicht dadurch schließlich einen Oszillator-Wechselstrom 102 von mehr als 20 mA. Nach einer kurzen Ansteuerungs-Pause wird der Wandler erneut angesteuert mit gleicher Amplitude, jedoch phasenverschoben. Dadurch wird die Membranschwingung gedämpft. Ferner wird nach dem Dämpfungs-Ansteuerzyklus, welcher aus mehreren Impulsen besteht, die aktuelle Schwingung des Sensors neu erfasst und synchronisiert 103. Bei der nächsten Ansteuerung wird dann wieder im Vergleich zur Eigenschwingung des Ultraschallsensors gegenphasig angesteuert. Das Synchronisieren ist hierbei notwendig, da eine Erfassung der Eigenschwingung des Sensors während einer Ansteuerung in der Regel nicht möglich ist. Somit werden mehrere Ansteuerzyklen verschiedener Amplitude durchgeführt, um die Membran zum Stillstand zu bringen. Wie in Figur 1 beispielhaft gezeigt, werden in dem Beispiel 3 Dämpfungszyklen 104, 105, 106 durchfahren. Die Synchronisierung 103 zwischen den Zyklen 104, 105, 106 benötigt Zeit, die in Folge nicht mehr zur Dämpfung zur Verfügung steht.

Es sind zwar auch Verfahren bekannt, die es vorteilhafterweise ermöglichen, unmittelbar nach einer Ansteuerflanke noch innerhalb einer halben Schwingungsperiode eine Aussage über den Schwingungszustand des Sensors treffen zu können. Hierdurch lässt sich die Ansteuerung bei jeder Periode synchronisieren. Voraussetzung für die Durchführung eines solchen Verfahrens ist jedoch, dass die Amplitude der gemäß der verwendeten Ansteuerung dem Ultraschallwandler zugeführten Eingangsamplitude nicht wesentlich größer ist als die Eigenschwingung des Sensors ist, da es sonst zu einer oft nur schwer vorhersagbaren Phasendrehung des Wandlersignals kommt. Außerdem ist zu beachten, dass eine Änderung der Amplitude auch einen Strom durch den Ultraschallwandler verursacht. Dies hat wiederum auch ein Signal am Ausgang eines des Signalverstärkers zur Folge hat.

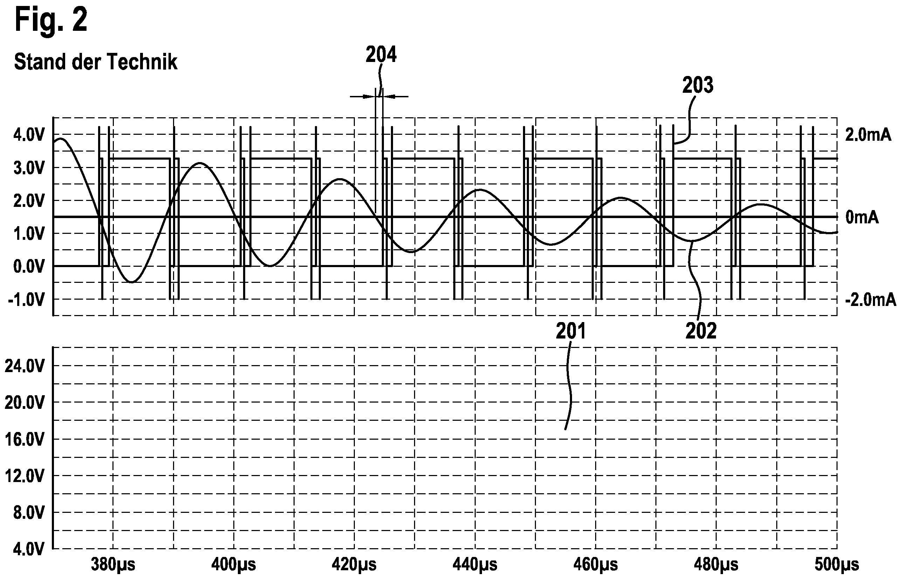

Anhand der in Figur 2 gezeigten Darstellung ist der oben genannte Effekt veranschaulicht, nämlich dass Schwingung des Wandlers nur verzögert erfasst werden kann. Dadurch wird erschwert, die Synchronisierung schnell genug vornehmen zu können. Im unteren Teil von Figur 2 ist ein Ansteuersignal 201 mit abfallender Amplitude gezeigt, und im oberen Teil sind der Strom 202 durch die Induktivität des Wandlers sowie das resultierende Ausgangsignal 203 des Signalverstärkers dargestellt. Mit 204 ist die jeweilige zeitliche Verzögerung, bedingt durch die Verstärkerlaufzeit, gekennzeichnet.

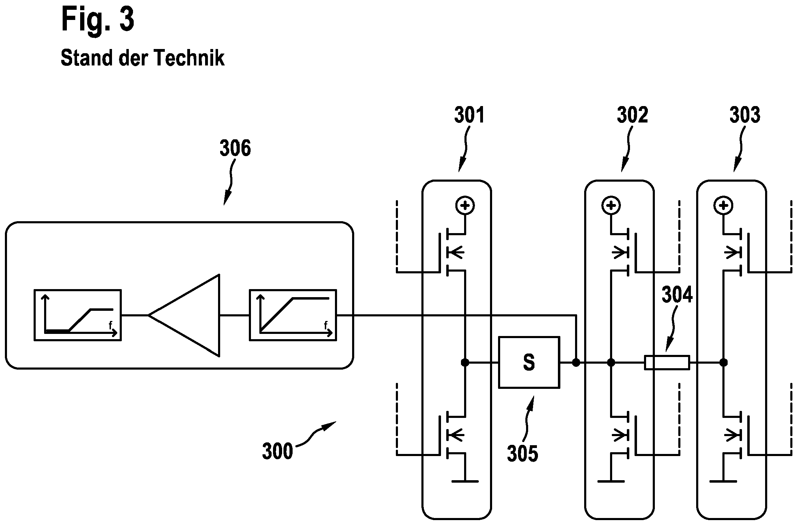

Es ist bekannt, das Umschalten einer Eingangsamplitude des Ultraschallwandlers für eine aktive Dämpfung in mehreren bzw. in vielen Schritten mittels einer Schaltung aus mehreren Halbleiterbrücken durchzuführen. In der Figur 3 ist ein Beispiel für eine solche stufenweise, mehrere Halbbrücken aufweisende Anordnung 300 gezeigt. Dabei erfolgt die Erregung des Ultraschallwandlers 305 sowie die initiale Dämpfung mit einer an die volle Betriebsspannung angeschlossenen, aus zwei Mosfet-Transistoren bestehenden Halbbrücke 301. Eine kleinere Amplitude wird dann mit einer weiteren Halbstufe 302 erzeugt, welche entweder an eine geringere Versorgungsspannung angeschlossen, oder mit einer Halbstufe 303, die über einen Widerstand 304 mit dem Wandler 305 verbunden ist. Somit benötigt jede für die Dämpfung zur Verfügung stehende Spannungsstufe eine separate Halbbrücke 301, 302, 303. In der Figur 3 ist weiterhin ein Messverstärker 306 für das Ausgangssignal des Ultraschallwandlers 305 gezeigt.

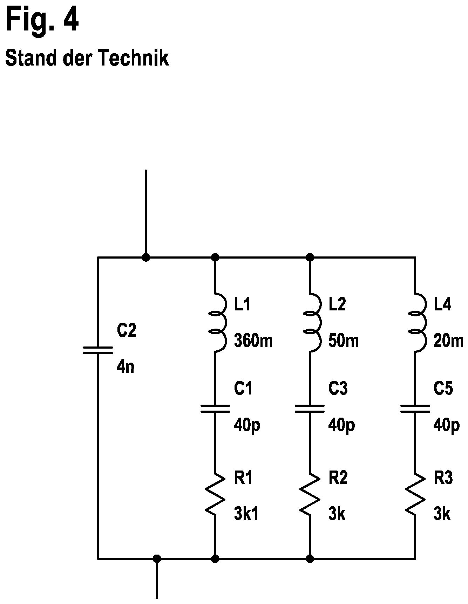

Jedoch ist für eine entsprechende Implementierung insbesondere der große Dynamikumfang der Dämpfungsansteuerung problematisch. So schwingt die Membran des Ultraschallwandlers kurz nach der Ansteuerung so stark, dass in der Induktivität L1 des in Figur 4 gezeigten Ersatzschaltbildes ein Strom von mehreren mA fließt. Figur 4 zeigt hierbei das Ersatzschaltbild eines typischen Ultraschallwandlers gemäß dem Stand der Technik mit beispielhaften Zahlenwerten für die vorkommenden Induktivitäten, Kapazitäten, und ohmschen Widerstände. mit Kapazitäten Im Rahmen der Dämpfung sollte dieser Strom durch L1 auf wenige µA bis hin zu nA reduziert werden können.
Eine Ansteuerungsschaltung zur Ansteuerung eines Ultraschallwandlers ist aus US 2010/113935 A1 bekannt. Ein Verfahren zur Dämpfung eines Wandlerelements eines Ultraschallwandlers durch aktive Gegensteuerung mit elektrischen Ansteuerungsimpulsen ist aus DE 195 48 161 C1 bekannt.

### Offenbarung der Erfindung

Erfindungsgemäß weist eine Ansteuerungsschaltung zur Ansteuerung eines Ultraschallwandlers einen Eingang für eine Versorgungsspannung, einen Eingang zum Empfangen eines Ansteuerungspulses, und einen Ausgang zur Ausgabe von Spannungsimpulsen an den Ultraschallwandler auf. Die Schaltungsanordnung hat einen ersten Schaltungsblock zum Erzeugen einer ersten Spannung und einen zweiten Schaltungsblock zum Erzeugen einer zweiten Spannung, die miteinander gekoppelt sind, im Betrieb der Schaltungsanordnung den Ultraschallwandler gemäß dem empfangenen Ansteuerungspuls abwechselnd über den ersten Schaltungsblock und über den zweiten Schaltungsblock zu versorgen derart, dass der zeitliche Mittelwert der an den Ultraschallwandler ausgegebenen Spannungsimpulse immer auf dem Wert der halben Versorgungsspannung gehalten wird.
Ferner wird erfindungsgemäß bei einem Verfahren zur Dämpfung eines resonanten Wandlerelements eines Ultraschallwandlers zum aktiven Gegensteuern der Ultraschallwandler mit elektrischen Ansteuerungsimpulsen mit einer zeitlich monoton abnehmenden Ansteuerungsamplitude angesteuert, wobei der zeitliche Mittelwert der Ansteuerungsimpulse immer bei dem Wert einer halben Versorgungsspannung der verwendeten Ansteuerungsschaltung gehalten wird.
Außerdem wird erfindungsgemäß ein Messsystem zum Detektieren von Objekten mittels Ultraschall bereitgestellt, dass einen Ultraschallsensor mit einem resonanten Wandlerelement sowie die erfindungsgemäße Ansteuerungsschaltung aufweist. Dabei ist das Messsystem dazu eingerichtet, nach einer zur Aussendung von Ultraschallwellen vorgenommen Anregung eine aktive Dämpfung des resonanten Wandlerelements durchzuführen derart, dass die Amplitude der bei der aktiven Dämpfung an den Ultraschallsensor ausgegebenen Spannungsimpulse immer kleiner ist als die Amplitude des Sensorsignal des Ultraschallsensors.

Bevorzugte Weiterbildungen der Erfindung ergeben sich aus den abhängigen Ansprüchen.

Somit wird erfindungsgemäß eine Lösung bereitgestellt zur Verwendung bei der Ansteuerung von Ultraschallwandlern bei Ultraschallwandler aufweisenden Messsystemen, wobei zum einen großer Dynamikumfang ausgenutzt werden kann. So kann zunächst für eine Ansteuerung die volle Betriebsspannung genutzt werden, die jedoch in vielen Stufen, kontinuierlich und sicher zu einem definierten Mittelwert hingeführt wird. In einer Ausführungsform der Erfindung kann aber die Form der Hüllkurve gegebenenfalls auch derart eingestellt werden, dass mit einer niedrigeren Startamplitude gearbeitet wird. Die Erfindung ist mit herkömmlichen Pulsgeneratoren verwendbar, wobei die Ansteuerungsfrequenz je nach Anwendungsbereich eingestellt wird. Dasselbe gilt, wie bereits angedeutet, für die Versorgungsspannung. Auf geänderte Anforderungen bei der Signalamplitude kann bei Bedarf dadurch reagiert werden, in dem die zeitliche Aktivierung der Absenkung der Ansteuerung geändert wird.

Die Erfindung arbeitet ratiometrisch, d.h. um denselben Wert, um den sich die Spannung in einem der Spannungsblöcke erhöht, wird die Spannung in dem anderen Spannungsblock verringert. Wegen der um den Mittelwert symmetrischen Ansteuerung ist insbesondere sichergestellt, dass mit keiner Halbwelle ein ausgegebenen Spannungsimpulse ein zu großer Ausschlag der Spannung erfolgt, was insbesondere vorteilhaft ist, wenn der angesteuerte Ultraschallwandler im Verlauf der aktiven Dämpfung bereits zu kleinen Sensorsignalen hin gedämpft wurde. Die Amplitude der Gegensteuerung ist über einen großen Bereich regelbar. Bevorzugt erfolgt die Gegenansteuerung permanent, also ohne Pausen. Es wird daher ermöglicht, im Rahmen der aktiven Dämpfung die Amplitude der Ansteuerspannung so zu modulieren, dass eine Synchronisierung nach jeder Flanke erfolgen kann und der Ultraschallwandler am Ende der aktiven Dämpfung eine hinreichend kleine Schwingungsamplitude aufweist. Der durch die Modulation hervorgerufene zeitliche Ansteuerungsfehler kann hinreichend klein gehalten werden. Es werden die kontinuierliche Gegensteuerung und dadurch der Entfall von Synchronisationszyklen ermöglicht. Insgesamt sind bei vorgegebener Gesamtdämpfungsdauer mehr Gegensteuerpulse möglich. Es wird folglich auch deutlich weniger Nebenmoden angeregt, wodurch sich ein besseres Signal-Rausch-Verhältnis ergibt.
Die Erfindung benötigt lediglich eine sehr einfache Hardware. Es ist vorteilhafterweise nicht erforderlich, mehrere Halbbrücken zu verwenden. So weist gemäß einer bevorzugten Ausführungsform, gemäß der nur eine Halbbrücke verwendet wird, die Ansteuerungsschaltung eine Gegentaktstufe bzw. eine Halbbrücke mit einem ersten Transistor und einen zweiten Transistor auf, die über den Eingang zum Empfangen eines Ansteuerungspulses ansteuerbar sind, wobei der erste Transistor mit dem ersten Schaltungsblock gekoppelt ist und der zweiten Transistor mit dem zweiten Schaltungsblock gekoppelt ist und wobei der Ausgang der Gegentaktstufe mit dem Ausgang zur Ausgabe von Spannungsimpulsen an den Sensor gekoppelt ist.

Erfindungsgemäß wird vorgesehen, dass die erfindungsgemäße Ansteuerungsschaltung ferner einen zum Ansteuern der Gegentaktstufe vorgesehenen Pulsgenerator, insbesondere einen Rechtecksignalgenerator, eine Hüllkurvenschaltung, und einen Mikrocontroller zum Steuern der Ansteuerungsschaltung aufweist, wobei die Hüllkurvenschaltung ein RC-Glied mit einem Kondensator und einen oder mehreren Widerständen zum Laden des Kondensator aufweist, so dass Ansteuerungsschaltung dazu eingerichtet ist, den Ultraschallwandler mit Spannungsimpulsen anzusteuern, deren Einhüllende durch die Ladekurve des Kondensators bestimmt ist und deren zeitlicher Mittelwert immer auf dem Wert der halben Versorgungsspannung gehalten wird.
Gemäß noch einer anderen Ausführungsform weist die Ansteuerungsschaltung den zum Ansteuern der Gegentaktstufe vorgesehenen Pulsgenerator, insbesondere einen Rechtecksignalgenerator, einen Mikrocontroller zum Steuern der Ansteuerungsschaltung, und einen Hüllkurvengenerator mit einem Digital-Analog-Wandler auf. Dabei kann der Hüllkurvengenerator in dem Mikrocontroller implementiert sein und der Mikrocontroller kann gemäß einer Variante dieser Ausführungsform auch zur Steuerung des zum Erzeugen einer ersten Spannung vorgesehenen ersten Schaltungsblocks und des zum Erzeugen einer zweiten Spannung vorgesehenen zweiten Schaltungsblocks ausgebildet sein.

Gemäß nach einer besonders vorteilhaften Weiterbildung der Erfindung ist die Ansteuerungsschaltung ferner dazu eingerichtet, die Spannungsimpulse an den Ultraschallwandler derartig zu erzeugen und auszugeben, dass sich eine Abnahme der Amplitude jeweils auf beide Halbwellen der durch die Spannungsimpulse gegebenen Ansteuerungssignalform aufteilt.

Durch die Verwendung eines DA-Wandlers oder des RC-Gliedes gemäß den obigen Ausführungsformen wird auf besonders komfortable Weise die Verwendung von deutlich mehr Spannungsabstufungen, im Vergleich zum Stand der Technik, ermöglicht. Es wird eine feinere und damit präzisere Möglichkeit der Ansteuerung ermöglicht, was wie bereits erwähnt insbesondere bei kleinen Amplituden von großem Vorteil ist.

Die Einstellung der Amplitude des Treibers der Gegensteuerung kann sehr schnell und in vielen Stufen vorgenommen werden. Die Erfindung ermöglicht somit vorteilhaft, dass Problem zu vermeiden, dass gegen Ende der Dämpfung das verbleibende Sensorsignal kleiner ist als die zur Verfügung stehende Ansteuerspannung, in welchem Fall kann die verbleibende Schwingung nicht gedämpft werden könnte. Es kann durch günstige Wahl der Hüllkurve sichergestellt werden, dass der Strom durch den Wandler, der sich aufgrund der sich ändernden Amplitude ergibt, nicht größer ist als der Strom, der aufgrund der mechanischen Schwingung auftritt. Insbesondere bei kleinen Amplituden erfolgt die Ansteuerung so, dass die Anregung weitere Schwingungsmoden und ungewollte Phasendrehungen, die eine aktive Dämpfung und Synchronisierung erschweren, unterbleiben oder zumindest deutlich reduziert wird.

Die Ausführungsform, die ein RC-Glied verwendet, wird in vielen Anwendungsfällen bevorzugt, Der Grund dafür ist, dass dadurch eine noch weiter verbesserte Dynamik bei der Ansteuerung ermöglicht, wobei insbesondere auch keine Quantisierungseffekte auftreten. Möglich wird eine solche Ansteuerung insbesondere deswegen, weil bei Verwendung eines RC-Glieds, wie oben beschreiben, die Amplitude des Dämpfungssignals auf jeden Fall streng monoton gehalten wird. Es hat sich gezeigt, dass eine Modulation in Form einer fallenden Exponentialkurve besonders vorteilhaft ist, da sie am ehesten dem Abklingen der Sensorschwingung bei aktiver Dämpfung entspricht. Gerade bei einem vorteilhaften exponentiellen Verlauf kann bei kleiner Amplitude der Gegenansteuerung die Auflösung noch verbessert werden.

Erfindungsgemäß kann der Kondensator über verschiedene Widerstände geladen werden. Dabei ist der Widerstand lediglich so zu wählen, dass die Ansteueramplitude so klein bleibt, dass weiterhin Synchronisierung möglich ist, d.h. in etwa so groß ist wie die Restschwingung des Sensors. Dies ist in der Praxis einfach zu bewerkstelligen.

Ausführungsformen der Erfindung werden anhand der Zeichnungen und der nachfolgenden Beschreibung näher erläutert. Es zeigen:
Zeichnungen
- Figur 1: ein Spannung-Zeit-Diagramm des zeitlichen Verlaufs einer Ansteuerungsamplitude zum Ansteuern eines Ultraschallsensors, und ein Spannungs-Strom-Diagramm des aus der Ansteuerungsamplitude resultierenden Sensorstroms, gemäß dem Stand der Technik,
- Figur 2: eine Spannungs-Zeit-Diagramm eines zeitlichen Verlauf einer Ansteuerungsamplitude zum Ansteuern eines Ultraschallsensors, und ein Spannungs-Strom-Diagramm des aus der Ansteuerungsamplitude resultierenden Sensorstroms, sowie den zeitlichen Verlaufs einer resultierenden Verstärkerspannung, aus denen eine zeitlich verzögerte Signalerfassung ersichtlich ist, gemäß dem Stand der Technik,
- Figur 3: ein Ultraschall-Messsystem, mit einer Ansteuerungsschaltung, die mehrere Halbbrücken aufweist, gemäß dem Stand der Technik,
- Figur 4: ein Ersatzschaltbild eines Ultraschallwandlers, gemäß dem Stand der Technik,
- Figur 5: ein Blockschaltbild des prinzipiellen Aufbaus eines Messsystems zum Detektieren von Objekten mittels Ultraschall, gemäß einer ersten Ausführungsform der Erfindung,
- Figur 6: eine Ansteuerungsschaltung, die einen Ultraschallwandler ansteuert, gemäß einer zweiten oder dritten Ausführungsform der Erfindung,
- Figur 7: eine erfindungsgemäße Hüllkurvenschaltung zur Erzeugung einer Hüllkurve mit Hilfe eines RC-Gliedes, gemäß der dritten Ausführungsform, und
- Figur 8: ein Spannung-Zeit-Diagramm des zeitlichen Verlaufs einer Ansteuerungsamplitude zum Ansteuern eines Ultraschallsensors, und ein Spannungs-Strom-Diagramm des aus der Ansteuerungsamplitude resultierenden Sensorstroms, gemäß einer Ausführungsform der Erfindung.

### Ausführungsformen der Erfindung

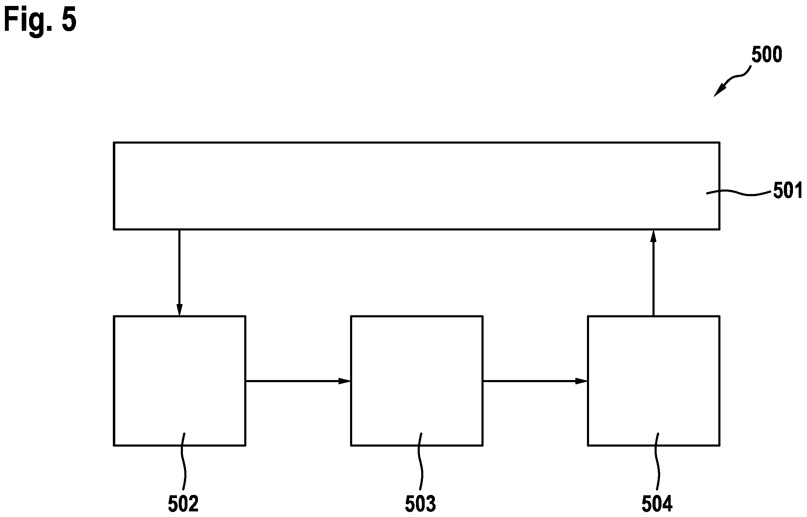

In Figur 5 ist schematisch der Aufbau eines erfindungsgemäßen Messsystems 500 zum Detektieren von Objekten mittels Ultraschall gezeigt, gemäß einer ersten Ausführungsform der Erfindung. Dabei bezeichnet das Bezugszeichen 503 den Ultraschallsensor bzw. die Sensormembrane. Diese wird mittels eines Treibers 502 angesteuert, der die erfindungsgemäße Ansteuerungsschaltung aufweist. Die Signale des Ultraschallwandlers 503 werden durch einen Signalverstärker 504 verstärkt, mit dem unter anderem eine Aussage über den Schwingungszustand des Wandlers bzw. des Ultraschallsensors gemacht werden kann, um eine permanente Synchronisierung durchzuführen. Der Treiber 502 bzw. die Ansteuerungsschaltung werden durch den die Steuereinheit 501, beispielsweise einem Mikrocontroller, gesteuert gemäß den Ergebnissen der Signalauswertung der von dem Signalverstärker 504 empfangenen Sensorsignale. In der Figur 2 ist das Ersatzschaltbild eines Ultraschallwandlers 20 gezeigt.

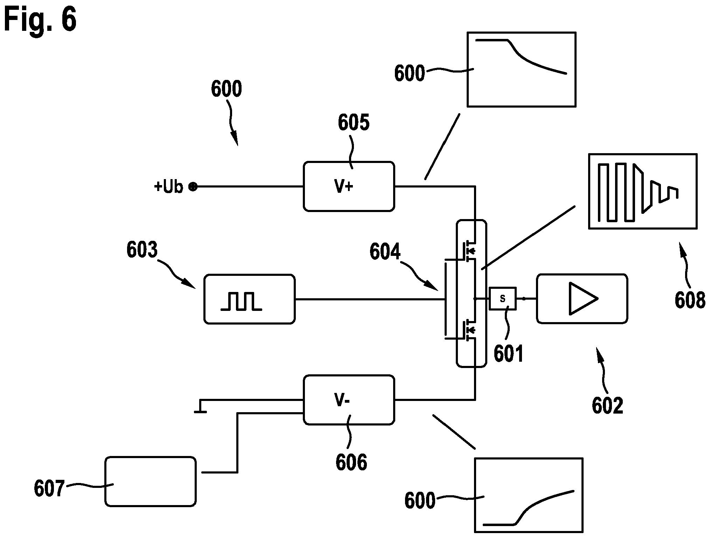

In Figur 6 ist der typische Aufbau der erfindungsgemäßen Ansteuerungsschaltung 600 gemäß einer zweiten Ausführungsform der Erfindung gezeigt. Dabei wird der Ultraschallsensor 601 erfindungsgemäß angesteuert und über den Signalverstärker 602 ausgelesen. Gemäß Figur 6 erfolgt die Ansteuerung des Ultraschallsensors 601 gemäß einem Rechtecksignals 603, dass erfindungsgemäß derart moduliert wird, dass es a) eine abnehmende Amplitude aufweist und dass b) dessen zeitlicher Mittelwert immer bei der halben Versorgungsspannung +Ub liegt. Die entsprechenden Ansteuerungsimpulse sind in Fig. 6 in dem mit 608 gezeigten Kästchen gezeigt.
Die Schaltung weist eine Halbbrücke 604 bzw. Gegentaktstufe auf, die mit dem Rechtecksignal 603 angesteuert wird. Die Spannungsversorgung der Brücke
604 wird durch die zwei Blöcke V+ und V- bereitgestellt, welche einen ersten Spannungsblock 605 bzw. positiven Treiber und einen zweiten Spannungsblock
606 bzw. negativen Treiber implementieren. Sie arbeitet ratiometrisch, die bereitgestellte Spannung ist abhängig von der vorgegebenen Spannung sowie der Betriebsspannung Ub.
Am Schaltungsteil V- kann eine Sollspannung in einem festen Bereich eingestellt werden. Gemäß einer günstigen Variante der Ausführungsform wird dazu beispielsweise ein Bereich von 0-3V vorgegeben, welche in eine relative Spannung im Bereich von 0 bis Ub/2 umgesetzt wird. Der Schaltungsteil V+ hingegen erzeugt eine entsprechende Spannung im Bereich von Ub bis Ub/2 derart, dass die Summe der beiden Spannungen wieder Ub ergibt. Hierbei wird vorteilhaft die Änderung der Amplitude derart gesteuert, dass die Änderung von groß zu klein auf beide Halbwellen aufgeteilt wird. Bei erfolgter Dämpfung liegt die halbe Betriebsspannung (Ub/2) am Eingang des Ultraschallsensors an.
Es ist auch eine Ansteuerung möglich, bei der die Spannung V+ ausgehend von Ub kontinuierlich gegen 0 abgesenkt wird, während die Spannung V- bei verbleibt. In diesem Fall würde der durch die Spannungsabsenkung verursachte Querstrom durch den Sensor nur während der Dauer Aktivierung von V+ auftreten. Er wäre doppelt so groß, dafür wäre der Querstrom durch den Sensor während der Aktivierung von v- Null. Gleiches gilt analog für V- variabel und V+ = Ub.

Die Vorgabe der Spannung kann dabei von einem DA Wandler eines Mikrocontrollers stammen. Dieser kann gemäß Figur 6 in dem Block 607 angeordnet sein. Am Ausgang der Halbbrücke ergibt sich ein moduliertes Rechteck Signal.

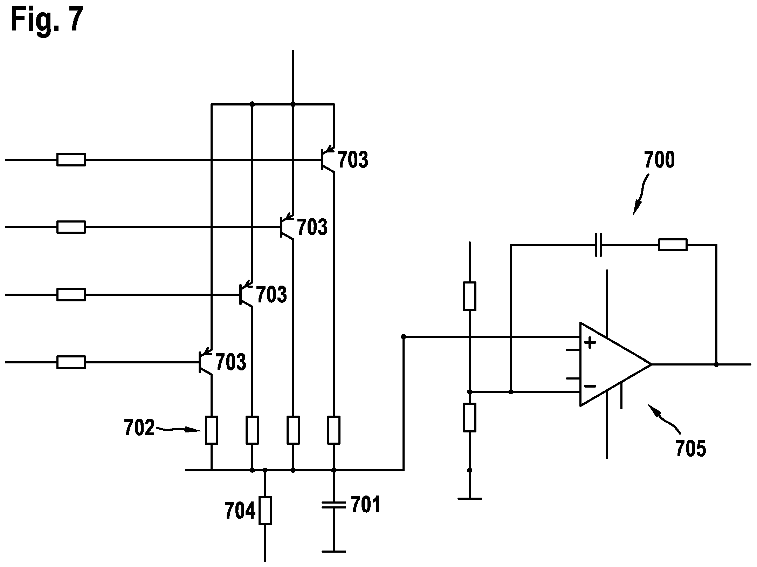

Gemäß einer dritten Ausführungsform der Erfindung erfolgt die Vorgabe der Spannung nicht von einem DA-Wandler, sondern wird stattdessen durch die Ladekurve eines Kondensators bestimmt. Dabei wird eine Schaltung mit einem RC-Glied verwendet, die beispielsweise in dem Block 607 gemäß Figur angeordnet sein kann, alternativ zu der Anordnung des DA-Wandlers. In Figur 7 ist eine beispielhafte erfindungsgemäße Schaltung 700 mit einem RC-Glied zur Erzeugung einer unteren Hüllkurve des Amplitudenverlaufs gezeigt. Gemäß der Figur 7 wird dabei der Kondensator 701 über verschiedene Vorwiderstände 702 geladen. In diesem Fall sind es beispielsweise 4 Vorwiderstände 702 zum Laden des Kondensators 701. Die Vorwiderstände 702 können jeweils durch einen angeschlossenen Transistor per Mikrocontroller (in Figur 7 nicht dargestellt) gesteuert werden. Ein paralleler Widerstand 704 entlädt den Kondensator anschließend wieder. Der Widerstand 704 ist wesentlich größer als die Vorwiderstände 702. In verschiedenen Ausführungsformen ist der parallele Widerstand 704 sogar im Größenordnungen größer als die Vorwiderstände 702. Die Spannung am Kondensator bildet anschließend die Vorgabe untere Hüllkurve der Amplitudenmodulation gemäß Figur 6. Bei der hier in Verbindung mit Figur 7 gezeigten Ausführungsform wird die Kondensatorspannung über eine Verstärkerstufe ausgegeben. Es gibt aber auch Ausführungsformen, welche an dieser Stelle auf eine Verstärkerstufe verzichten. In manchen Ausführungsformen wird für die Vorgabe der Hüllkurve statt der Ladekurve des Kondensators eine Entladekurve verwendet, so wie oben bereits ausführlicher erläutert wurde.

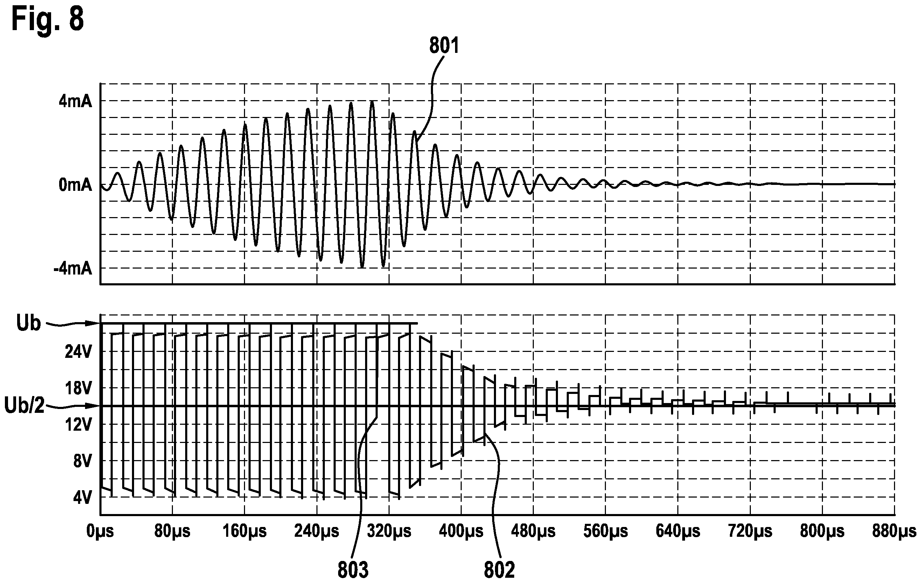

In Figur 8, unten, ist ein Spannungs-Zeit-Diagramm mit einem beispielhaften Verlauf der von der erfindungsgemäßen Ansteuerungsschaltung Spannungsimpulse gezeigt. Wie in Figur 8 zu erkennen ist, erzeugt die Ansteuerungsschaltung ein moduliertes Rechtecksignal 802, dessen zeitlicher Mittelwert bei der halben Versorgungsspannung Ub/2 liegt. Die Amplitude des Signals 802 hat dabei anfänglich den Wert der Versorgungsspannung Ub. Während dieser Zeit wird der angesteuerte Ultraschallwandler bzw. dessen Piezomembran zum Schwingen angeregt. Bei 803 erfolgt eine Phasenverschiebung, um den Ultraschallwandler daraufhin aktiv gegenzusteuern. Ab dem Zeitpunkt von ca. 320-330 µs ist eine deutliche allmähliche Verringerung der Ansteuerungsamplitude zu erkennen. Erfindungsgemäß teilt sich die Abnahme auf beide Halbwellen auf und ist kontinuierlich gehalten, was in der Figur 8 auch an den oberen und unteren Begrenzungen der jeweiligen Halbimpulse zu erkennen ist. Das Signal pendelt sich sicher auf den Wert Ub/2 ein, was die Ansteuerungsspannung bei zum Stehen gebrachter Sensormembran ist. In Figur 8, oben, wird zum Vergleich der Strom durch die Induktivität des Ultraschallwandlers gezeigt. Die Zahlenangeben und die Skalen in Figur 8 sind beispielhaft und dienen nur zur Veranschaulichung.
Neben der schriftlichen Offenbarung der Erfindung wird hiermit explizit auf deren zeichnerische Darstellung in den Fig. 1 bis 8 verwiesen.

## Patentansprüche

1. Ansteuerungsschaltung (600) zur Ansteuerung eines Ultraschallwandlers (503, 601), aufweisend einen Eingang für eine Versorgungsspannung (Ub), einen Eingang zum Empfangen eines Ansteuerungspulses, und
einen Ausgang zur Ausgabe von Spannungsimpulsen (608, 802) an den Ultraschallwandler (503, 601), wobei die Ansteuerungsschaltung (600) einen ersten Schaltungsblock (605) zum Erzeugen einer ersten Spannung und einen zweiten Schaltungsblock (606) zum Erzeugen einer zweiten Spannung aufweist, die miteinander gekoppelt sind, im Betrieb der Schaltungsanordnung den Ultraschallwandler (503, 601) gemäß dem empfangenen Ansteuerungspuls (603) abwechselnd über den ersten Schaltungsblock (605) und über den zweiten Schaltungsblock (606) zu versorgen derart, dass der zeitliche Mittelwert der an den Ultraschallwandler (503, 601) ausgegebenen Spannungsimpulse (608) immer auf dem Wert der halben Versorgungsspannung (Ub/2) gehalten wird, wobei eine Gegentaktstufe (604) mit einem ersten Transistor und einen zweiten Transistor, die über den Eingang zum Empfangen eines Ansteuerungspulses ansteuerbar sind, wobei der erste Transistor mit dem ersten Schaltungsblock (605) gekoppelt ist und der zweiten Transistor mit dem zweiten Schaltungsblock (606) gekoppelt ist und wobei der Ausgang der Gegentaktstufe (604) mit dem Ausgang zur Ausgabe von Spannungsimpulsen (608) an den Ultraschallwandler (503, 601) gekoppelt ist, wobei zum Ansteuern der Gegentaktstufe (604) ein Pulsgenerator, insbesondere einen Rechtecksignalgenerator (603), eine Hüllkurvenschaltung (700), und einen Mikrocontroller (501) zum Steuern der Ansteuerungsschaltung vorgesehen sind, wobei die Hüllkurvenschaltung (700) ein RC-Glied mit einem Kondensator (701) und einen oder mehreren Widerständen (702) zum Laden des Kondensator (701) aufweist, so dass die Ansteuerungsschaltung (600) dazu eingerichtet ist, den Ultraschallwandler (503, 601) mit Spannungsimpulsen anzusteuern, deren Einhüllende durch die Ladekurve des Kondensators (701) bestimmt ist und
deren zeitlicher Mittelwert immer auf dem Wert der halben
Versorgungsspannung (Ub/2) gehalten wird.

2. Ansteuerungsschaltung (600) nach Anspruch 1, die dazu eingerichtet ist, die Spannungsimpulse (608) an den Ultraschallwandler (503, 601) derartig zu erzeugen und auszugeben, dass sich eine Abnahme der Amplitude Jeweils auf beide Halbwellen der durch die Spannungsimpulse (608) gegebenen Ansteuerungssignalform aufteilt.

3. Verfahren zur Dämpfung eines Wandlerelements eines Ultraschallwandlers (503, 601) durch aktive Gegensteuerung mit elektrischen Ansteuerungsimpulsen (608), wobei zum aktiven Gegensteuern der Ultraschallwandler (503, 601) mit einer monoton abnehmenden Ansteuerungsamplitude angesteuert wird, deren zeitlicher Mittelwert immer bei dem Wert einer halben Versorgungsspannung (Ub/2) der verwendeten Ansteuerungsschaltung (600) gehalten wird, **dadurch gekennzeichnet, dass** eine Ansteuerungsschaltung (600) mit einem RC-Glied verwendet wird und die Einhüllende der monoton abnehmenden Ansteuerungsamplitude durch die Ladekurve des Kondensators (701) des RC-Glieds bestimmt ist.

4. Verfahren nach Anspruch 3, wobei die Gegensteuerung mit monoton abnehmender Ansteuerungsamplitude derart durchgeführt wird, dass sich die Abnahme der Amplitude jeweils auf beide Halbwellen der verwendeten Ansteuerungssignalform aufteilt.

5. Messsystem (500) zum Detektieren von Objekten mittels Ultraschall, aufweisend einen Ultraschallsensor (503, 601) mit einem resonanten Wandlerelement (503) und die Ansteuerungsschaltung (502, 600) nach einem der Ansprüche 1 oder 2, wobei das Messsystem (500) dazu eingerichtet ist, nach einer zur Aussendung von Ultraschallwellen vorgenommen Anregung eine aktive Dämpfung des resonanten Wandlerelements (503) durchzuführen derart, dass die Amplitude der bei der aktiven Dämpfung an den Ultraschallsensor (503, 601) ausgegebenen Spannungsimpulse (608) immer kleiner ist als die Amplitude des Sensorsignals des Ultraschallsensors (503, 601).

## Claims

1. Actuating circuit (600) for actuating an ultrasonic transducer (503, 601), having an input for a supply voltage (Ub), an input for receiving an actuating pulse, and an output for outputting voltage pulses (608, 802) to the ultrasonic transducer (503, 601), wherein the actuating circuit (600) has a first circuit block (605) for generating a first voltage and a second circuit block (606) for generating a second voltage, which circuit blocks are coupled to one another, during operation of the circuit arrangement to supply power to the ultrasonic transducer (503, 601) in accordance with the received actuating pulse (603) alternately by means of the first circuit block (605) and by means of the second circuit block (606) in such a way that the mean value of the voltage pulses (608) output to the ultrasonic transducer (503, 601) over time is always kept at the value of half of the supply voltage (Ub/2), wherein a push-pull stage (604) having a first transistor and a second transistor, which transistors can be actuated by means of the input for receiving an actuating pulse, wherein the first transistor is coupled to the first circuit block (605) and the second transistor is coupled to the second circuit block (606) and wherein the output of the push-pull stage (604) is coupled to the output for outputting voltage pulses (608) to the ultrasonic transducer (503, 601), wherein, to actuate the push-pull stage (604), a pulse generator, in particular a square-wave signal generator (603), an enveloping circuit (700), and a microcontroller (501) are provided to control the actuating circuit, wherein the enveloping circuit (700) has an RC element having a capacitor (701) and one or more resistors (702) for charging the capacitor (701), so that the actuating circuit (600) is configured to actuate the ultrasonic transducer (503, 601) using voltage pulses whose envelope is determined by the charging curve of the capacitor (701) and whose mean value over time is always kept at the value of half of the supply voltage (Ub/2).

2. Actuating circuit (600) according to Claim 1, which is configured to generate and to output the voltage pulses (608) to the ultrasonic transducer (503, 601) in such a way that a decrease in the amplitude is divided across each of the two half-waves of the actuating signal form given by the voltage pulses (608).

3. Method for damping a transducer element of an ultrasonic transducer (503, 601) through active counteraction using electrical actuating pulses (608), wherein, for the active counteraction, the ultrasonic transducer (503, 601) is actuated using a monotonically decreasing actuating amplitude whose mean value over time is always kept at the value of half of the supply voltage (Ub/2) of the used actuating circuit (600), **characterized in that** an actuating circuit (600) having an RC element is used and the envelope of the monotonically decreasing actuating amplitude is determined by the charging curve of the capacitor (701) of the RC element.

4. Method according to Claim 3, wherein the counteraction is carried out using the monotonically decreasing actuating amplitude in such a way that the decrease in the amplitude is divided over each of the two half-waves of the used actuating signal form.

5. Measurement system (500) for detecting objects by means of ultrasound, having an ultrasonic transducer (503, 601) having a resonant transducer element (503) and the actuating circuit (502, 600) according to either of Claims 1 and 2, wherein the measurement system (500) is configured, after excitation performed to transmit ultrasonic waves, to carry out active damping of the resonant transducer element (503) in such a way that the amplitude of the voltage pulses (608) output to the ultrasonic sensor (503, 601) during the active damping is always smaller than the amplitude of the sensor signal of the ultrasonic sensor (503, 601).

## Revendications

1. Circuit d'excitation (600) destiné à exciter un transducteur d'ultrasons (503, 601), possédant une entrée pour une tension d'alimentation (Ub), une entrée destinée à la réception d'une impulsion d'excitation et une sortie destinée à délivrer des impulsions de tension (608, 802) au transducteur d'ultrasons (503, 601), le circuit d'excitation (600) possédant un premier bloc de circuit (605) destiné à générer une première tension et un deuxième bloc de circuit (606) destiné à générer une deuxième tension, lesquels sont connectés ensemble pour, en fonctionnement de l'arrangement de circuit, alimenter le transducteur d'ultrasons (503, 601) en alternance par le biais du premier bloc de circuit (605) et par le biais du deuxième bloc de circuit (606) en fonction de l'impulsion d'excitation (603) reçue de telle sorte que la moyenne de l'impulsion de tension (608) délivrée au niveau du transducteur d'ultrasons (503, 601) est toujours maintenue à la valeur de la moitié de la tension d'alimentation (Ub/2), un étage symétrique (604) comprenant un premier transistor et un deuxième transistor, lesquels peuvent être pilotés par le biais de l'entrée destinée à la réception d'une impulsion d'excitation, le premier transistor étant connecté au premier bloc de circuit (605) et le deuxième transistor étant connecté au deuxième bloc de circuit (606) et la sortie de l'étage symétrique (604) étant connectée à la sortie destinée à délivrer des impulsions de tension (608) au transducteur d'ultrasons (503, 601), un générateur d'impulsions, notamment un générateur de signaux rectangulaires (603), un circuit à courbe d'enveloppe (700) et un microcontrôleur (501) destiné à commander le circuit d'excitation étant présents pour exciter l'étage symétrique (604), le circuit à courbe d'enveloppe (700) possédant un réseau RC comprenant un condensateur (701) et une ou plusieurs résistances (702) servant à charger le condensateur (701), de sorte que le circuit d'excitation (600) est conçu pour exciter le transducteur d'ultrasons (503, 601) avec des impulsions de tension dont l'extrémité d'enveloppe est déterminée par la courbe de charge du condensateur (701) et dont la moyenne dans le temps est toujours maintenue à la valeur de la moitié de la tension d'alimentation (Ub/2).

2. Circuit d'excitation (600) selon la revendication 1, lequel est conçu pour générer les impulsions de tension (608) et les délivrer au transducteur d'ultrasons (503, 601) de telle sorte qu'une décroissance de l'amplitude se répartit toujours sur les deux demies ondes de la forme de signal d'excitation définie par les impulsions de tension (608).

3. Procédé d'amortissement d'un élément convertisseur d'un transducteur d'ultrasons (503, 601) par contre-régulation active avec des impulsions d'excitation (608) électriques, la contre-régulation active s'effectuant en excitant le transducteur d'ultrasons (503, 601) avec une amplitude d'attaque à décroissance monotone, dont la moyenne dans le temps est toujours maintenue à la valeur d'une moitié de la tension d'alimentation (Ub/2) du circuit d'excitation (600) utilisé, **caractérisé en ce qu'**un circuit d'excitation (600) possédant un réseau RC est utilisé et l'extrémité d'enveloppe de l'amplitude d'excitation à décroissance monotone est déterminée par la courbe de charge du condensateur (701) du réseau RC.

4. Procédé selon la revendication 3, la contre-régulation avec l'amplitude d'excitation à décroissance monotone s'effectuant de telle sorte que la décroissance de l'amplitude se répartit toujours sur les deux demies ondes de la forme de signal d'excitation utilisée.

5. Système de mesure (500) destiné à détecter des objets au moyen d'ultrasons, possédant un capteur ultrasonique (503, 601) ayant un élément convertisseur (503) résonant et le circuit d'excitation (502, 600) selon l'une des revendications 1 ou 2, le système de mesure (500) étant conçu pour, après une excitation effectuée en vue de l'émission d'ondes ultrasoniques, effecteur un amortissement actif de l'élément convertisseur (503) résonant de telle sorte que l'amplitude de l'impulsion de tension (608) délivrée au capteur ultrasonique (503, 601) lorsque l'amortissement est actif est toujours inférieure à l'amplitude du signal de capteur du capteur ultrasonique (503, 601).
